# EUROPEAN PATENT APPLICATION

(11) **EP 1 909 042 A1**
(43) Date of publication of application: **09.04.2008**
(21) Application number: 06021042.4
(22) Date of filing: 06.10.2006
(51) Int. Cl.: F24D 19/10, F24H 9/12, F28D 20/00

(54) **Assembly for delivering hot water**

(71) Applicant: Tanx, B.V. i.o, 6997 AB Hoog Keppel (NL)
(72) Inventor: Boeve, Jan Antonie, 6997 AB Hoog Keppel (NL); Offringa, Otto Dirk, 6824 OA Arnhem (NL)
(74) Representative: Voncken, Bartholomeus Maria Ch.

(57) **Abstract**

Assembly for delivering hot water, comprising a heater for heating water and delivering it through a first line, and a buffer container for water, having a first lower water port connected to the first line and a second upper water port connacted to a hot water draw-off point. In an embodiment the upper port is connected to the first line by means of a first valve which is switchable between a first position connecting the lower port to and disconnecting the upper port from, respectively, the first line and a second position connecting the upper port to and disconnecting the lower port from, respectively, the first line. The lower port further is connected to a water discharge line by means of a second valve which is switchable between a first closed position and a second open position. Control means are provided for switching the first and second valves.

## Description

The invention relates to an assembly for delivering hot water.

It is an object of the present invention to improve such an assembly.

Thus, in accordance with the present invention, there is provided an assembly for delivering hot water, comprising a heater for heating water and delivering it through a first line, and a buffer container for water, having a first water port connected to the first line and a second water port connected to a hot water draw-off point, wherein the second water port of the buffer container is an upper port positioned at or near the top of the buffer container and that the first water port is a lower port positioned at or near the bottom of the buffer container, wherein the upper port is connected to the first line by means of a first valve which is switchable between a first position connecting the lower port to and disconnecting the upper port from, respectively, the first line and a second position connecting the upper port to and disconnecting the lower port from, respectively, the first line, and wherein the lower port further is connected to a water discharge line by means of a second valve which is switchable between a first closed position and a second open position, and wherein control means are provided for switching the first and second valves.

Such an assembly allows a more effective delivery of hot water.

Preferably, the control means for the first valve detects the temperature of the water in the first line upstream of the first valve. In reaction upon the detected temperature the first valve will be operated.

For example, preferably the control means for the first valve upon detecting hot water in the first line switches the first valve to the second position and upon detecting cold water switches the first valve to the first position.

In a simple, yet effective embodiment the control means for the first valve is a measuring bellows or bimetallic strip in communication with the first line.

Likewise it is preferred that the control means for the second valve detects the temperature of the water in the lower part of the buffer container. Again, this detection is the basis for the operation of the second valve.

For example, preferably the control means for the second valve upon detecting cold water in the buffer container switches the second valve to the second position and upon detecting hot water switches the second valve to the first position.

Also in this case it is possible that the control means for the second valve is a measuring bellows or bimetallic strip positioned in the buffer container.

It is noted, that also other control means may be provided.

Preferably the buffer container is heat-insulated. Then it is not necessary that the buffer means is heated by separate heating devices.

According to an alternative embodiment of the assembly according to the present invention, the control means comprise a first temperature sensor positioned in the first line upstream from the first valve, a second temperature sensor positioned at the bottom of the buffer container and a third temperature sensor positioned near the lower port outside of the buffer container, and wherein a control device is provided gathering signals from the temperature sensors and, based upon these, providing control signals for switching the first and second valves.

This offers the possibility to control the operation of the assembly in a very sophisticated manner, enabling it to react on a number of different situations in an optimal manner.

Preferably, then, the buffer container is provided with a heating device for heating water contained therein. Such a heating device may have a low power consumption and basically is used to compensate heat losses, and preferably will not be used for actually heating the water. Preferably the power consumption is of such a low rating that in absence of a thermostatic controlling device the temperature within the buffer container never raises to a level that would require additional safety devices.

In a second aspect of the present invention there is provided an assembly for delivering hot water, comprising a heater for heating water and delivering it through a first line, and a buffer container for water, having a first water port connected to the first line and a second water port connected to a hot water draw-off point, wherein the second water port of the buffer container is an upper port positioned at or near the top of the buffer container and that the first water port is a lower port positioned at or near the bottom of the buffer container, wherein the upper port is connected to the first line by means of a first valve which is switchable between a first position connecting the lower port to and disconnecting the upper port from, respectively, the first line and a second position connecting the upper port to and disconnecting the lower port from, respectively, the first line, and wherein the lower port by means of a second line further is connected to a second valve which is switchable between a first position closing the second line and connecting a cold water supply line to a cold water draw-off point and a second position closing the cold water supply line and connecting the second line to the cold water draw-off point, and wherein control means are provided for switching the first and second valves.

As a result a saving of water also can be obtained, because cold water is not fed to a water discharge line, but to the cold water draw-off point.

Preferably, the control means are three temperature sensors positioned in the first line upstream of the first valve, in the buffer container near the bottom thereof and in the second line, respectively, cooperating with a control device gathering signals from the temperature sensors and, based upon these, providing control signals for switching the first and second valves.

Preferably, then, the buffer container is provided with a heating device for heating water contained therein.

According to yet another embodiment of the assembly according to the present invention, the buffer container is divided internally by a division in an upper container part and a lower container part. This allows a further optimization of the management of hot water, with attendant savings of energy and water.

Preferably, the division is a perforated plate.

In such a case it is preferred that a heating device and temperature sensor within the buffer container are positioned on top of the division.

In a third aspect of the present invention there is provided an assembly for delivering hot water, comprising a heater for heating water and delivering it through a first line, a buffer container for water, having an upper port and a lower port, and an auxiliary container having an upper port and a lower port, wherein the lower port of the buffer container is connected to the upper port of the auxiliary container by a connecting line and wherein the upper port of the buffer container is connected to a hot water draw-off point, wherein a first valve is positioned between the first line, connecting line and upper port of the buffer container which is switchable between a first position closing the first line and disconnecting the connecting line from the first line and upper port of the buffer container, a second position connecting the first line with the connecting line and disconnecting the port from the valve and a third position connecting the first line with the port and disconnecting the connecting line from the valve, wherein the lower port of the auxiliary container by means of a second line further is connected to a second valve which is switchable between a first position connecting the second line with a cold water supply line and with a cold water draw-off point, a second position connecting the cold water supply line with the cold water draw-off point and disconnecting the second line and a third position connecting the second line with the cold water draw-off point and disconnecting the cold water supply line, wherein the lower port of the auxiliary container further is connected to a water discharge line by means of a third valve which is switchable between a first closed position and a second open position and wherein control means are provided for switching the first, second and third valves.

This allows to achieve an optimized use of the assembly, while reducing costs relating to, among others, insulation material and energy.

Preferably, in such an embodiment, the control means are three temperature sensors positioned in the first line upstream of the first valve, in the buffer container near the bottom thereof and in the second line, respectively, cooperating with a control device gathering signals from the temperature sensors and, based upon these, providing control signals for switching the valves.

The invention will be elucidated while referring to the drawing, in which:
Figures 1-8 show diagrammatically a first embodiment of a first embodiment of the assembly according to the present invention in successive operational stages;
Figures 9-15 likewise show a second embodiment of the assembly according to the present invention in successive operational stages;
Figures 16-22 likewise show a third embodiment of the assembly according to the present invention in successive operational stages;
Figures 23-25 show a fourth embodiment of the assembly according to the present invention in different operational stages;
Figures 26-30 show a fifth embodiment of the assembly according to the present invention in successive operational stages;
Figures 31-36 show a sixth embodiment of the assembly according to the present invention in successive operational stages; and
Figure 37 shows a seventh embodiment of the assembly according to the present invention.

Before in detail describing the figures, the following is noted. Throughout the figure lines containing cold water are illustrated as single lines, whereas lines containing hot water are illustrated as double lines (the indications 'cold' and 'hot' are relative indications and are not absolute). A vertical hatching indicates hot water and a horizontal hatching indicates cold water (again, the indications 'cold' and 'hot' are relative indications and are not absolute).

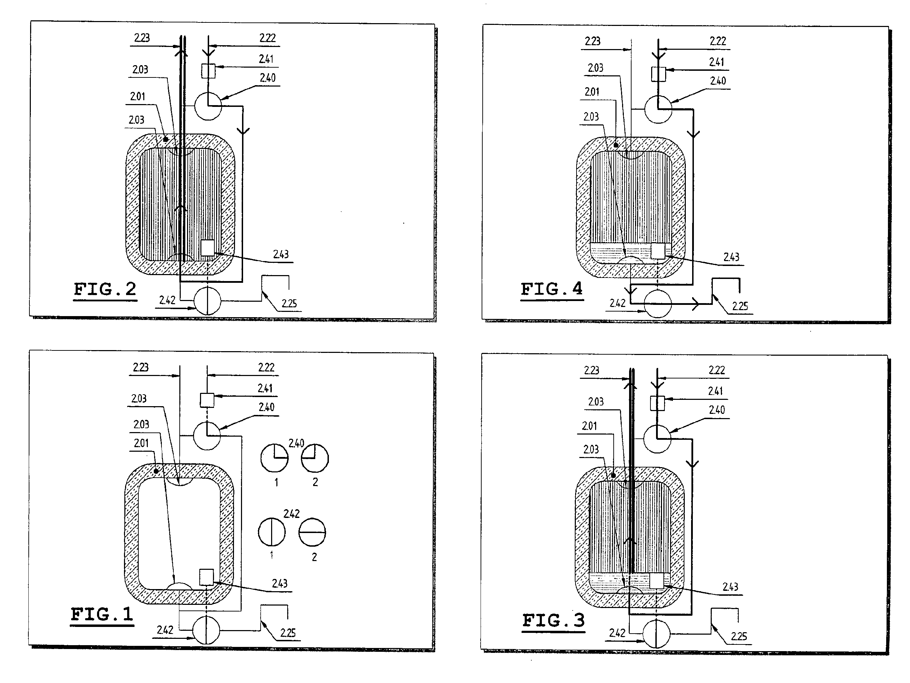

Firstly referring to figure 1, an assembly for delivering hot water is shown, comprising a heater (not illustrated) for heating water and delivering it through a first line 2.22. A buffer container 2.01 for water has a first lower water port connected to the first line 2.22 through a first valve 2.40 and a second upper water port connected to a line 2.23 leading to a hot water draw-off point (not illustrated).

The second upper water port of the buffer container 2.01 is a port positioned at or near the top of the buffer container having a flow damper 2.03, and the first lower water port is a port positioned at or near the bottom of the buffer container likewise having a flow damper 2.03.

The upper port (or line 2.23) is connected to the first line 2.22 by means of the first valve 2.40 which is switchable between a first position connecting the lower port to and disconnecting the upper port from, respectively, the first line and a second position connecting the upper port to and disconnecting the lower port from, respectively, the first line.

The lower port further is connected to a water discharge line 2.25 by means of a second valve 2.42 which is switchable between a first closed position and a second open position.

Control means 2.41 and 2.43 are provided for switching the first and second valves. The control means 2.41 for the first valve 2.40 detects the temperature of the water in the first line 2.22 upstream of the first valve. Upon detecting hot water in the first line the control means for the first valve switches the first valve 2.40 to the second position, and upon detecting cold water it switches the first valve to the first position.

The control means 2.41 for the first valve in the illustrated embodiment is a measuring bellows or bimetallic strip in communication with the first line 2.22.

The control means 2.43 for the second valve is a measuring bellows or bimetallic strip positioned in the buffer container 2.01 which detects the temperature of the water in the lower part of the buffer container. Upon detecting cold water in the buffer container the control means for the second valve 2.42 switches the second valve to the second position, and upon detecting hot water it switches the second valve to the first position.

Preferably the buffer container 2.01 is heat-insulated.

Figure 2 shows an operational position of the assembly. The buffer container 2.01 is filled with hot water and the water in the first line 2.22 has cooled down.

As shown in figure 2, cold water enters the lower port of the buffer container 2.01 while hot water is pressed out of the upper port towards the line 2.23 and the hot water draw-off point (not shown).

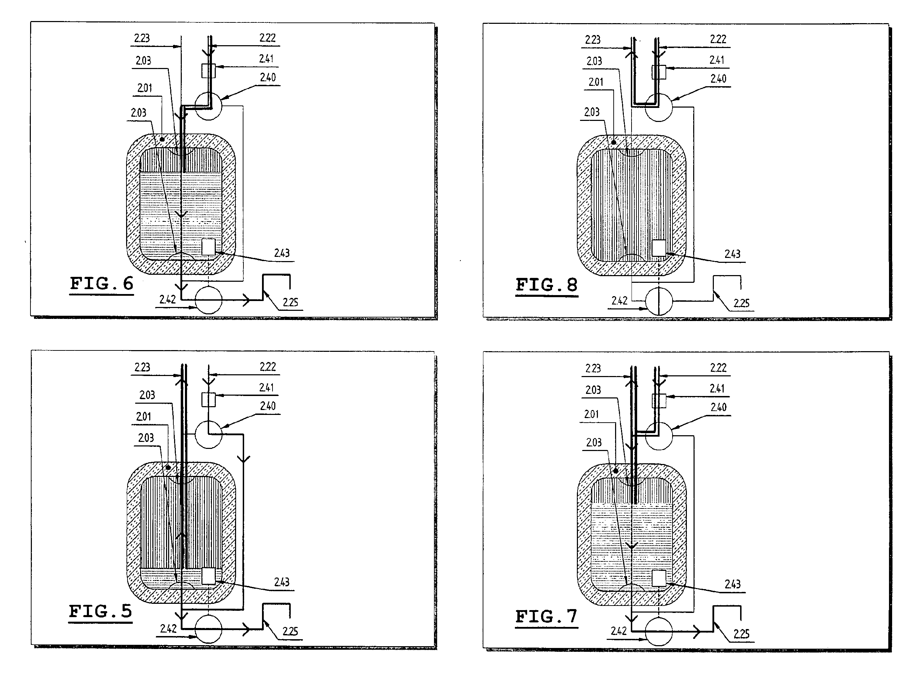

Figure 3 shows the situation in which control means 2.43 senses cold water, and it switches valve 2.42 to its open position as illustrated in figure 4.

Part of the cold water flowing down the second line 2.22 and past first valve 2.40 flows off through second valve 2.42 towards the water discharge line 2.25, whereas the remainder of the water enters the buffer container 2.01 through the lower port thereof. Hot water keeps entering the line 2.23 at the top of the buffer container (figure 5).

When the control means 2.41 senses hot water in the first line 2.22 (figure 6) it switches the first valve 2.40 to the second position. The flow of hot water is divided in a stream entering the buffer container 2.01 through the upper port, and a stream towards the hot water draw-off point (line 2.23), see figure 7. The hot water entering the buffer container presses cold water out of the lower port towards the water discharge line 2.25 (valve 2.42 still open).

Finally, when the control means 2.43 again senses hot water, the second valve 2.42 switches to its closed position and all hot water from the first line 2.22 flows to the hot water discharge line.

When no longer hot water is required at the hot water draw-off point, there is no flow anymore through line 2.23 and first line 2.22, and eventually the stationary hot water in the first line 2.22 will cool down sufficiently to let the control means 2.41 react by switching the first valve. Then again the situation according to figure 2 is achieved.

Safety provisions (not shown) may be provided for detecting malfunctions.

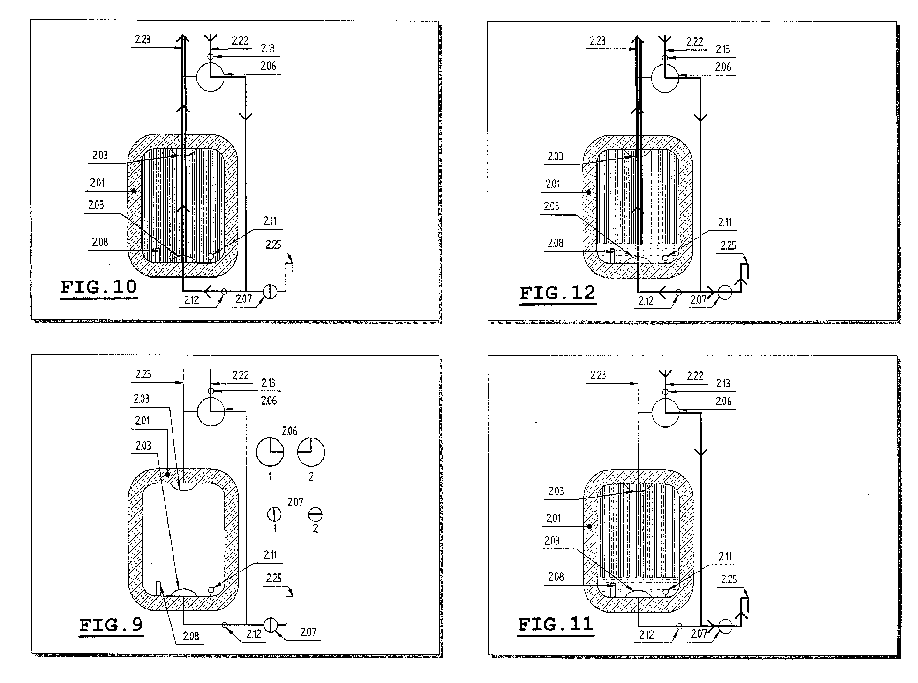

Figure 9 shows a second embodiment. Now the control means comprise a first temperature sensor 2.13 positioned in the first line 2.22 upstream from the first valve 2.06, a second temperature sensor 2.11 positioned at the bottom of the buffer container 2.01 and a third temperature sensor 2.12 positioned near the lower port outside of the buffer container. Not illustrated is a control device gathering signals from the temperature sensors and, based upon these, providing control signals for switching the first and second valves.

Using such a combination of temperature sensors and control device offers the possibility to measure time intervals between certain events for controlling the operation of the assembly and optimize the operation of the assembly.

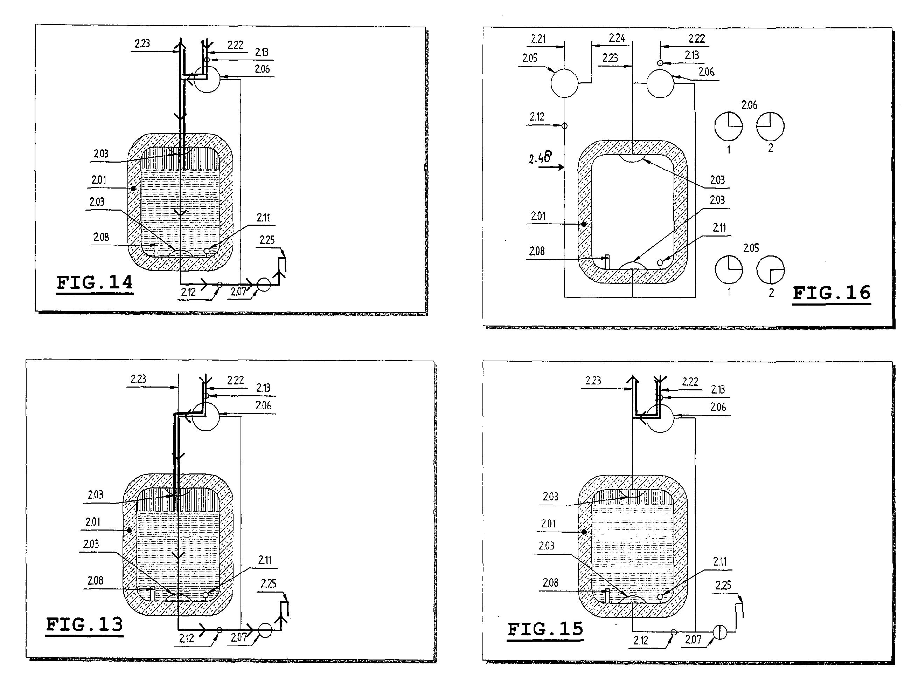

Figure 10 basically corresponds to figure 2. Figure 11 is a situation in which the second valve 2.07 has switched to its open position (based on a signal of sensor 2.11) and wherein a flow of cold water into the buffer container 2.01 has occurred. Figure 12 basically corresponds to figure 4. Figure 13 basically corresponds to figure 6, whereas figures 14 and 15 basically correspond to figures 7 and 8, respectively.

The buffer container 2.01 in this embodiment is provided with a heating device 2.08 for heating water contained therein.

Figure 16 illustrates another assembly for delivering hot water according to the invention. It likewise comprises a heater (not shown) for heating water and delivering it through a first line 2.22, and a buffer container 2.01 for water, having a first lower water port connected to the first line and a second upper water port connected to a hot water draw-off point (line 2.23).

The second upper water port of the buffer container is positioned at or near the top of the buffer container and the first lower water port is positioned at or near the bottom of the buffer container.

The upper port is connected to the first line 2.22 by means of a first valve 2.06 which is switchable between a first position connecting the lower port to and disconnecting the upper port from, respectively, the first line and a second position connecting the upper port to and disconnecting the lower port from, respectively, the first line.

The lower port by means of a second line 2.48 further is connected to a second valve 2.05 which is switchable between a first position closing the second line and connecting a cold water supply line 2.21 to a cold water draw-off point 2.24, and a second position closing the cold water supply line 2.21 and connecting the second line 2.48 to the cold water draw-off point 2.24.

Control means are provided for switching the first and second valves, comprising a first temperature sensor 2.13 positioned in the first line 2.22 upstream of the first valve 2.06, a second temperature sensor 2.11 positioned in the buffer container 2.01 near the bottom thereof and a third temperature sensor 2.12 in the second line 2.48. These temperature sensors cooperate with a control device (not illustrated) gathering signals from the temperature sensors and, based upon these, providing control signals for switching the first and second valves.

Further the buffer container 2.01 again is provided with a heating device 2.08 for heating water contained therein.

The main difference with the previous embodiments is, that the valve leading to a water discharge line has been omitted and that, now, cold water can flow to a cold water draw-off point. This leads to a saving in water costs.

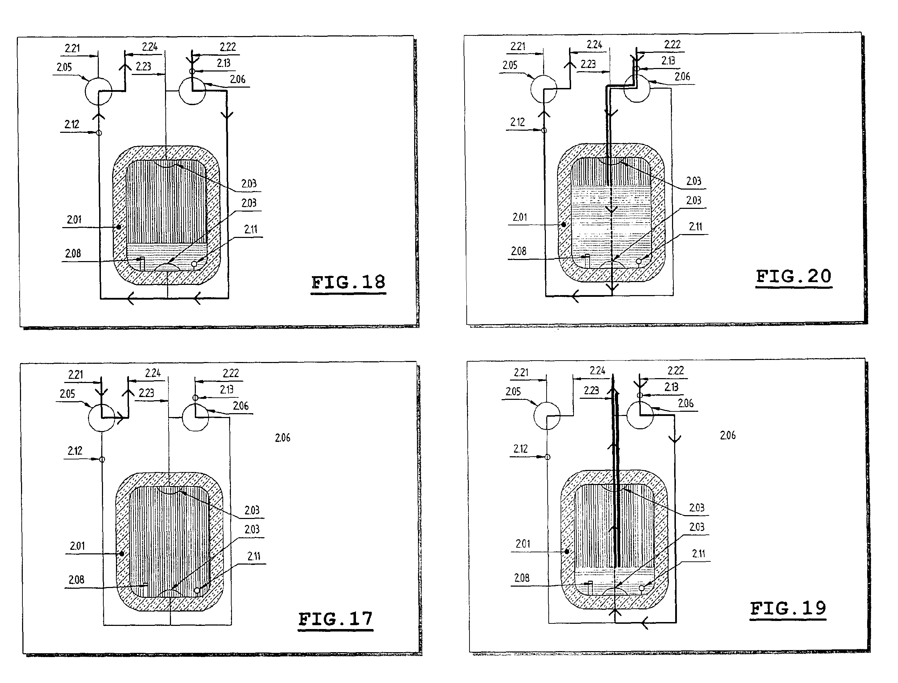

Figure 17 shows a situation in which the second valve 2.05 has switched to its first position. Cold water can flow directly from the supply line 2.21 towards the cold water draw-off point 2.24.

Cooled down water from the first line 2.22 can flow to the cold water draw-off point 2.24 when the first valve 2.06 is in its first position and second valve 2.05 in its second position (figure 18).

When hot water is requested at the hot water draw-off point (line 2.23) part of the cooled down water flows into the buffer container 2.01 (through the lower port) while hot water leaves the upper port. This is shown in figure 19.

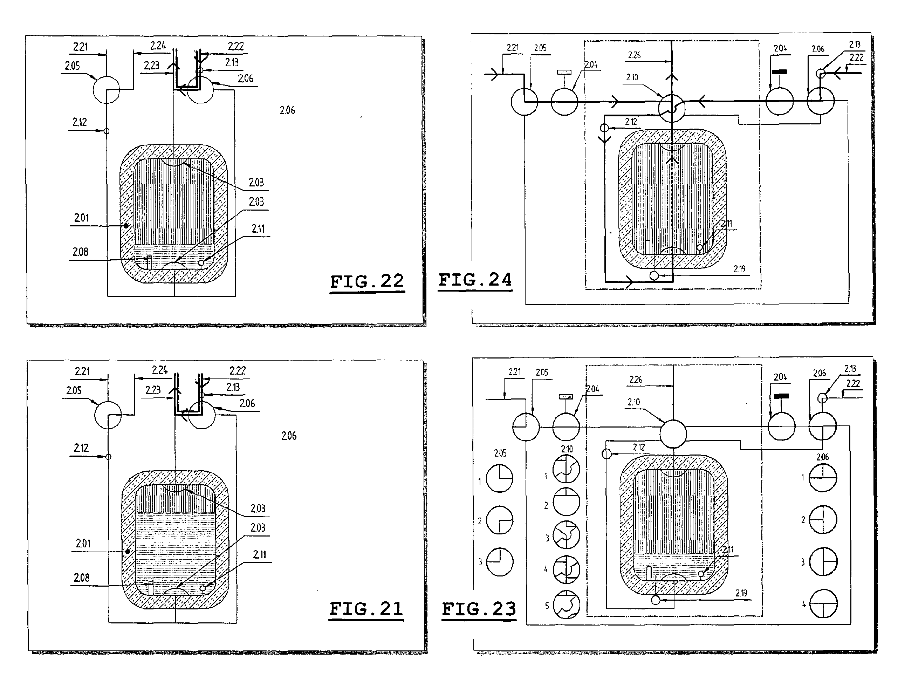

When the temperature sensor 2.13 has sensed hot water, the first valve is switched to its second position (figure 20) and part of the hot water flows into the upper port, while cold water leaves the lower port to the second line 2.48 and towards the cold water draw-off point 2.24. The remaining part of the hot water flows through line 2.23 upwards towards the hot water draw-off line (not illustrated). The resulting situation is a combination of figures 20 and 21.

Figure 22 shows a direct connection between the first line 2.22 and line 2.23 as stated above, but in a situation in which the buffer container 2.01 is nearly filled again with hot water.

In figures 23-25 an embodiment is illustrated with control cocks 2.04 for hot and cold water and a low pressure distribution cock 2.10. That will always allow water from the buffer container to flow without obstruction to the draw-off point.

The buffer container will not be under the line pressure of the water supplied through 2.21 and 2.22 allowing the use of more cost effective containers.

This embodiment contains a pressure relief valve 2.19 that can be used as a water discharching device if discharching over 2.26 is not desired in which case valve 2.10 will block the flow towards 2.26.

Valve 2.19 also acts as a safety device if externally blocking 2.26 would lead to a pressure build-up in the container. This offers a user the possibility to request draw-off water as wanted. Line 2.26 leads to the combined hot/cold water draw-off point.

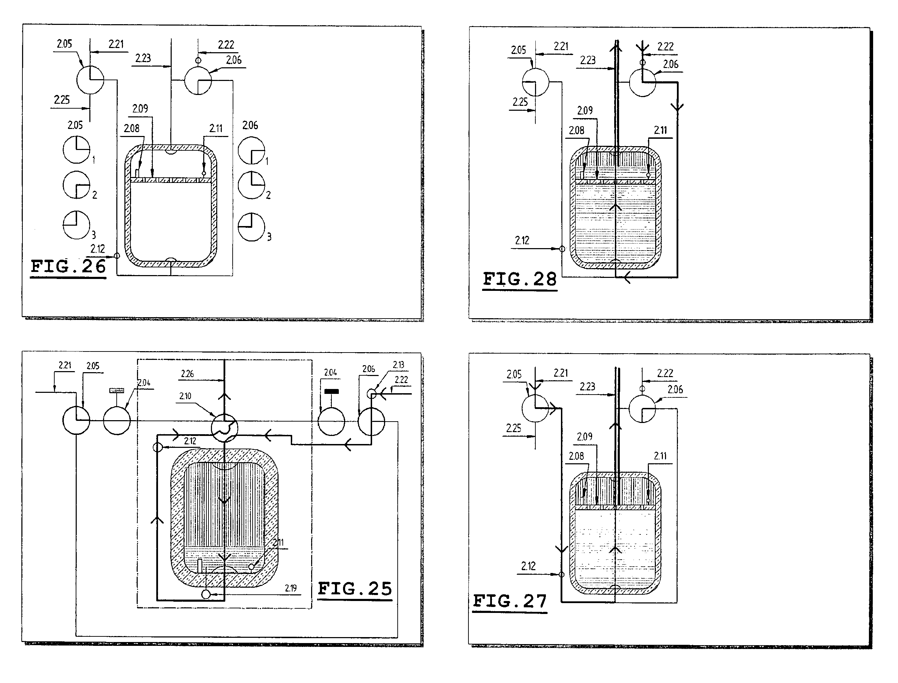

Figures 26-30 relate to an embodiment of the assembly according to the invention, wherein the buffer container 2.01 is divided internally by a division 2.09 in an upper container part and a lower container part. Here, the division 2.09 is a perforated plate.

Further, a heating device 2.08 and temperature sensor 2.11 within the buffer container are positioned on top of the division 2.09.

Figure 27 shows a stage in which the amount of hot water of the lower container part has been used (pressed out of the upper port) by feeding cold water from the cold water supply line 2.21 into the lower port. When temperature sensor 2.11 senses cold water, the heater (not illustrated) is activated and cooled down water from the first line 2.22 is fed into the lower port (figure 28).

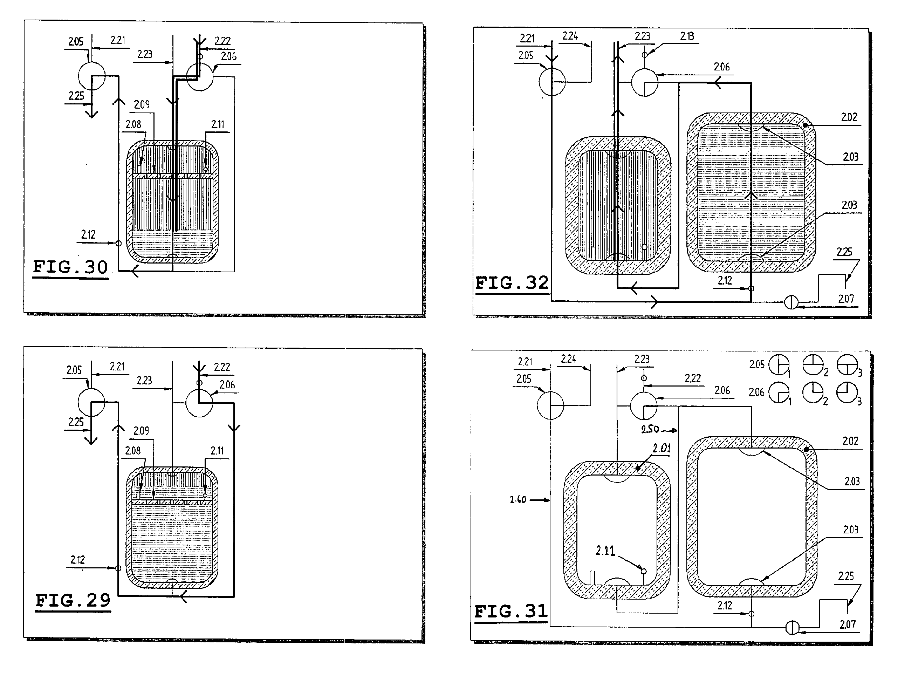

In figure 29 part of the cooled down water from line 2.22 flows into the lower port (not illustrated), whereas the remainder is discharged through valve 2.05 which has switched to an appropriate position.

When the temperature sensor positioned in the first line 2.22 upstream from the first valve 2.06 senses hot water, it switches the first valve as shown in figure 30. Part of the hot water enters the upper port, whereas another part is available in line 2.23 leading to the hot water draw-off point. Cold water is pressed out of the lower port towards the discharge line 2.25. When the buffer container 2.01 is filled again with hot water, the second valve 2.05 is switched such that no flow can occur through the lower port, and all hot water is directed to line 2.23.

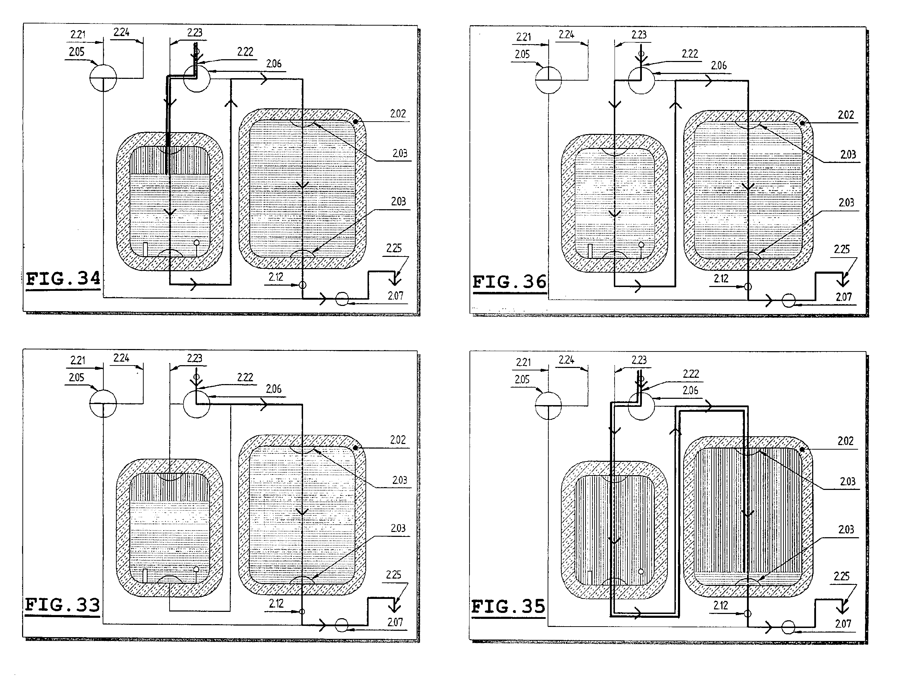

Yet another embodiment of the assembly for delivering hot water is illustrated in figure 31. It comprises a heater (not shown) for heating water and delivering it through a first line 2.22, a buffer container 2.01 for water, having an upper port and a lower port, and an auxiliary container 2.02 having an upper port and a lower port.

The lower port of the buffer container 2.01 is connected to the upper port of the auxiliary container 2.02 by a connecting line 2.50 and the upper port of the buffer container is connected to a hot water draw-off point by line 2.23.

A first valve 2.06 is positioned between the first line 2.22, connecting line 2.50 and upper port of the buffer container (through line 2.23) which is switchable between a first position closing the first line and disconnecting the connecting line from the first line and upper port of the buffer container, a second position connecting the first line with the connecting line and disconnecting the port from the valve and a third position connecting the first line with the port and disconnecting the connecting line from the valve.

The lower port of the auxiliary container 2.02 by means of a second line 2.60 further is connected to a second valve 2.05 which is switchable between a first position connecting the second line 2.60 with a cold water supply line 2.21 and with a cold water draw-off point 2.24, a second position connecting the cold water supply line with the cold water draw-off point and disconnecting the second line and a third position connecting the second line with the cold water draw-off point and disconnecting the cold water supply line.

The lower port of the auxiliary container 2.02 further is connected to a water discharge line 2.25 by means of a third valve 2.07 which is switchable between a first closed position and a second open position.

Control means are provided for switching the first, second and third valves, comprising a first temperature sensor 2.13 positioned in the first line 2.22 upstream of the first valve 2.06, a second temperature sensor 2.11 in the buffer container 2.01 near the bottom thereof and a third temperature sensor 2.12 in the second line 2.60, cooperating with a control device (not illustrated) gathering signals from the temperature sensors and, based upon these, providing control signals for switching the valves 2.06, 2.05 and 2.07.

Figure 32 shows the operational position in which cold water from supply line 2.21 flows through second line 2.60, through the auxiliary container 2.02, through connecting line 2.40 and into buffer container 2.01. Hot water leaves the upper port of latter and reaches line 2.23. The heater line 2.22 is disconnected by the first valve 2.06.

When temperature sensor 2-11 in the buffer container senses cold water, the first valve 2.06 is switched (figure 33) and part of the cooled down water in line 2.22 reaches the upper port of the auxiliary container 2.02 and ultimately reaches (through third valve 2.07) the discharge line 2.25. The remainder of the cooled down water from line 2.22 enters the lower port of the buffer container while hot water is pressed out of the upper port towards line 2.23.

The situation according to figure 34 occurs when the temperature sensor 2.13 (see figure 32) sensed hot water. This situation persists until also the auxiliary container 2.02 is filled with hot water (figure 35) and the temperature sensor 2.12 senses hot water. Then the third valve 2.07 is closed, such that no water can flow through the buffer container and auxiliary container, directing the entire hot water flow from the first line 2.22 towards the hot water draw-off point (line 2.23).

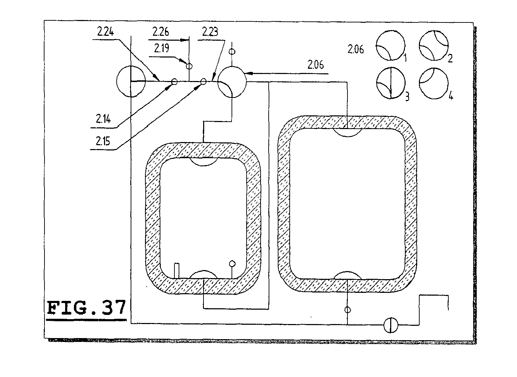

Figure 36 shows a preparatory situation in which a calibration of parameters can occur for optimizing the operation. The temperature sensors 2,11 and 2.13 in combination with a control timer (not shown) are used for, if necessary, selecting a cold start mode or a malfunction mode.

Finally figure 37 shows an embodiment basically corresponding with the previous one, however with an amended distribution valve 2.06, and measuring devices 2.14, 2.15 and 2.19 for, for example, the mass flow, pressure and temperature.

The invention is not limited to the embodiments described before, which may be varied widely within the scope of the invention as defined by the appending claims. Thus the invention also encompasses a component which basically comprises all parts of the assembly according to any of the previous claims, but without the heater. Such a component can be retrofitted in an existing system to obtain the benefits according to the present invention.

## Claims

1. Assembly for delivering hot water, comprising a heater for heating water and delivering it through a first line, and a buffer container for water, having a first water port connected to the first line and a second water port connected to a hot water draw-off point, wherein the second water port of the buffer container is an upper port positioned at or near the top of the buffer container and that the first water port is a lower port positioned at or near the bottom of the buffer container, wherein the upper port is connected to the first line by means of a first valve which is switchable between a first position connecting the lower port to and disconnecting the upper port from, respectively, the first line and a second position connecting the upper port to and disconnecting the lower port from, respectively, the first line, and wherein the lower port further is connected to a water discharge line by means of a second valve which is switchable between a first closed position and a second open position, and wherein control means are provided for switching the first and second valves.

2. Assembly according to claim 1, wherein the control means for the first valve detects the temperature of the water in the first line upstream of the first valve.

3. Assembly according to claim 2, wherein the control means for the first valve upon detecting hot water in the first line switches the first valve to the second position and upon detecting cold water switches the first valve to the first position.

4. Assembly according to claim 2 or 3, wherein the control means for the first valve is a measuring bellows or bimetallic strip in communication with the first line.

5. Assembly according to any of the previous claims, wherein the control means for the second valve detects the temperature of the water in the lower part of the buffer container.

6. Assembly according to claim 5, wherein the control means for the second valve upon detecting cold water in the buffer container switches the second valve to the second position and upon detecting hot water switches the second valve to the first position.

7. Assembly according to claim 5 or 6, wherein the control means for the second valve is a measuring bellows or bimetallic strip positioned in the buffer container.

8. Assembly according to any of the previous claims, wherein the buffer container is heat-insulated.

9. Assembly according to claim 1, wherein the control means comprise a first temperature sensor positioned in the first line upstream from the first valve, a second temperature sensor positioned at the bottom of the buffer container and a third temperature sensor positioned near the lower port outside of the buffer container, and wherein a control device is provided gathering signals from the temperature sensors and, based upon these, providing control signals for switching the first and second valves.

10. Assembly according to claim 9, wherein the buffer container is provided with a heating device for heating water contained therein.

11. Assembly for delivering hot water, comprising a heater for heating water and delivering it through a first line, and a buffer container for water, having a first water port connected to the first line and a second water port connected to a hot water draw-off point, wherein the second water port of the buffer container is an upper port positioned at or near the top of the buffer container and that the first water port is a lower port positioned at or near the bottom of the buffer container, wherein the upper port is connected to the first line by means of a first valve which is switchable between a first position connecting the lower port to and disconnecting the upper port from, respectively, the first line and a second position connecting the upper port to and disconnecting the lower port from, respectively, the first line, and wherein the lower port by means of a second line further is connected to a second valve which is switchable between a first position closing the second line and connecting a cold water supply line to a cold water draw-off point and a second position closing the cold water supply line and connecting the second line to the cold water draw-off point, and wherein control means are provided for switching the first and second valves.

12. Assembly according to claim 11, wherein the control means are three temperature sensors positioned in the first line upstream of the first valve, in the buffer container near the bottom thereof and in the second line, respectively, cooperating with a control device gathering signals from the temperature sensors and, based upon these, providing control signals for switching the first and second valves.

13. Assembly according to claim 11 or 12, wherein the buffer container is provided with a heating device for heating water contained therein.

14. Assembly according to any of the previous claims, wherein the buffer container is divided internally by a division in an upper container part and a lower container part.

15. Assembly according to claim 14, wherein the division is a perforated plate.

16. Assembly according to claim 14 or 15, wherein a heating device and temperature sensor within the buffer container are positioned on top of the division.

17. Assembly for delivering hot water, comprising a heater for heating water and delivering it through a first line, a buffer container for water, having an upper port and a lower port, and an auxiliary container having an upper port and a lower port, wherein the lower port of the buffer container is connected to the upper port of the auxiliary container by a connecting line and wherein the upper port of the buffer container is connected to a hot water draw-off point, wherein a first valve is positioned between the first line, connecting line and upper port of the buffer container which is switchable between a first position closing the first line and disconnecting the connecting line from the first line and upper port of the buffer container, a second position connecting the first line with the connecting line and disconnecting the port from the valve and a third position connecting the first line with the port and disconnecting the connecting line from the valve, wherein the lower port of the auxiliary container by means of a second line further is connected to a second valve which is switchable between a first position connecting the second line with a cold water supply line and with a cold water draw-off point, a second position connecting the cold water supply line with the cold water draw-off point and disconnecting the second line and a third position connecting the second line with the cold water draw-off point and disconnecting the cold water supply line, wherein the lower port of the auxiliary container further is connected to a water discharge line by means of a third valve which is switchable between a first closed position and a second open position and wherein control means are provided for switching the first, second and third valves.

18. Assembly according to claim 17, wherein the control means wherein the control means are three temperature sensors positioned in the first line upstream of the first valve, in the buffer container near the bottom thereof and in the second line, respectively, cooperating with a control device gathering signals from the temperature sensors and, based upon these, providing control signals for switching the valves.

19. Component comprising the assembly without the heater, presenting all the features of such a component disclosed in any one of the preceding claims and being thus constructed and evidently intended for use in the assembly as claimed in any one of the previous claims.
